# EUROPEAN PATENT APPLICATION

(11) **EP 3 330 743 A1**
(43) Date of publication of application: **06.06.2018**
(21) Application number: 17204852.2
(22) Date of filing: 01.12.2017
(51) Int. Cl.: G01S 19/16, G01S 19/34

(54) **EQUIPMENT FOR MONITORING AMBIENT PARAMETERS AROUND A VEHICLE**

(30) Priority: 01.12.2016 IT 201600122283
(71) Applicant: Sodi, Paolo, 59100 Prato (IT); Sodi, Roberto, 59011 Carmignano (PO) (IT)
(72) Inventor: Sodi, Paolo, 59100 Prato (IT); Sodi, Roberto, 59011 Carmignano (PO) (IT)
(74) Representative: Mannucci, Michele

(57) **Abstract**

An equipment for monitoring ambient parameters around a vehicle, comprising:
- a coupling apparatus for coupling to an axle shaft of a vehicle,
- an electric power supply device comprising:
o at least one member rotating around an own rotation axis and suitable to come into contact, with its outer surface, with the surface of said axle shaft, so that the rotation of said axle shaft causes the rotation of said at least one rotating member around its axis,
o at least one electric generator, operatively coupled to said member and suitable to take motion from said rotating member for generating electric power,
o at least one electric energy accumulator,

- at least one detector for detecting ambient parameters, supplied by said power supply device.

## Description

### Technical Field

The present invention relates to the field of monitoring ambient parameters, particularly, although not exclusively, for monitoring parameters without the driver's knowledge, such as the vehicle's position.

### State of the Art

As it is well known, police forces, intelligence agencies and investigative agencies in general often need to follow and monitor people behavior.

They need, for example, to follow the movements of a vehicle for monitoring one or more people who interact with the vehicle.

To do this, a geolocation device is hidden in the vehicle (often fastened below the vehicle); this device may be for instance a GPS receiver, with which a transmitter is associated for transmitting the coordinates to a control unit.

In this way it is possible to follow the vehicle, monitoring the position coordinates sent to the control unit by the GPS device, for example associating them to an electronic mapping system.

However, such "tailing" has substantially two problems.

The first one is the duration of the electric battery powering the GPS device and the transmitter. When the battery is flat, the signal sent by the GPS device is lost and it is no longer possible to know the vehicle position.

Therefore, people in charge of monitoring the vehicle shall periodically replace the flat GPS device with a charged one, or shall replace the battery. This is a very complex task, as it shall be done secretly.

The second problem is the difficulty in hiding and fastening the geolocation device below the vehicle, as this operation shall be often done quickly and in very uncomfortable positions.

### Object and summary of the invention

The object of the invention is to provide an equipment for monitoring ambient parameters around a vehicle, allowing to avoid the replacement of the equipment in case of power failure as well as the replacement of any battery associated with the equipment.

In this field, a further important object of the invention is to provide an equipment for monitoring ambient parameters around a vehicle that is energetically independent.

A further important object of the invention is to provide an equipment for monitoring ambient parameters around a vehicle that is easy and simple to be installed.

A further important object of the invention is o provide an equipment for monitoring ambient parameters around a vehicle that is easy to be demounted.

A further important object of the invention is to provide an equipment for monitoring ambient parameters around a vehicle that is structurally simple and operatively reliable.

These and other objects, that will be better described below, are achieved through an equipment for monitoring ambient parameters around a vehicle, comprising:
- a coupling apparatus for coupling to an axle shaft of a vehicle,
- an electric power supply device comprising:
   - at least one member rotating around an own rotation axis and suitable to come into contact, with its outer surface, with the surface of the axle shaft, so that the rotation of the axle shaft causes the rotation of said at least one rotating member around its axis,
   - at least one electric generator, operatively coupled to the rotating member and suitable to take motion from the rotating member for generating electric power,
   - at least one electric energy accumulator,
at least one detector for detecting ambient parameters, supplied by the power supply device.

It should be understood that the present invention can be applied to any vehicle provided with a wheel and an axle shaft or, more in general, a shaft exiting from the wheel hub.

The coupling apparatus preferably comprises a a fast coupling system for fast coupling to the axle shaft.

According to preferred embodiments, the coupling apparatus comprises a first part defining a cradle for housing the axle shaft, and a second part suitable to be closed onto the first part in order to fasten the group formed by the first part and the second part to the axle shaft contained there inside.

The second part is preferably hinged to an end of the first part, a coupling mechanism, preferably a fast coupling mechanism for coupling the two parts being provided at opposite ends of the first part and the second part with respect to the hinge.

The fast coupling mechanism preferably comprises a toothed portion, preferably with a saw-like toothing, defined on the first or second part and suitable to be inserted into a corresponding tight portion defined on the second or first part; the fast coupling mechanism being preferably of the rachet-type.

According to preferred embodiments, rotating rollers are provided on the first part and/or second part of the coupling apparatus, the rollers having the rotation axis preferably parallel to the axis of the rotating member; the outer surface of the rollers defines, with the surface of the rotating member, the areas of contact and fastening between the coupling apparatus and the vehicle axle shaft.

According to preferred embodiments, the at least one rotating member rotates around an own rotation axis integral with the coupling apparatus.

According to preferred embodiments, the coupling apparatus, the electric generator, and the at least one detector of ambient parameters are integral so as to form a single object suitable to be directly fixed on the vehicle axle shaft, preferably in a single coupling step.

According to preferred embodiments, the at least one rotating member is kinetically coupled to at least one rotor of the at least one electric generator of the rotor/stator type.

The rotation axis of the at least one rotating member is preferably misaligned with respect to the rotation axis of the rotor of the electric generator, the axes being preferably parallel.

The at least one rotating member is preferably kinetically coupled to at least one rotor of the at least one electric generator of the rotor/stator type by means of a flexible chain or belt coupling, or a similar coupling, or by means of one or more transmission gears for transmitting the rotary motion.

The rotation axis of the at least one rotating member is preferably aligned with the rotation axis of the rotor of the electric generator.

According to preferred embodiments, the at least one detector of ambient parameters comprises a position detector, preferably a GPS or the like, and preferably a transmitting device for transmitting position data to a control unit.

According to preferred embodiments, the at least one detector of ambient parameters comprises one or more of the following: at least one temperature sensor, at least one humidity sensor, at least one view system like preferably a camera or a video camera, at least on microphone.

According to preferred embodiments, the equipment comprises anti-rotation means suitable to prevent the coupling apparatus from rotating, at least partially, integrally with the vehicle axle shaft; the anti-rotation means comprise for example an appendix integral with the coupling apparatus and/or the electric generator and/or the detector of ambient parameters, the appendix being suitable to abut against a part of the vehicle, so that the rotation of the axle shaft drives the apparatus into rotation until the appendix abuts against a portion of the vehicle, thus preventing the equipment from rotating, with the axle shaft continuing rotating inside the equipment, driving the rotating member into rotation and producing electric energy.

According to preferred embodiments, the electric energy accumulator, allowing to store the generated electric energy and to power the detector, comprises for example an electric battery recharged through the electric energy produced by means of the two electric generators.

### Brief description of the drawings

Further characteristics and advantages of the present invention will be more apparent from the description of a preferred, although not exclusive, embodiment, illustrated by way of non-limiting example in the attached tables of drawing, wherein:
Fig. 1 is an axonometric view of an equipment according to the invention, partially opened so that some components inside it are visible and fixed to the axle shaft of a vehicle;
Fig. 2 is an axonometric view of the equipment of Fig. 1, partially rotated so as to abut against the bottom of a vehicle, thus preventing it from rotating integrally with the axle shaft;
Fig. 3 is an axonometric view of an equipment according to the invention, different than that of the previous figures, partially opened so that some components inside it are visible and fixed to the axle shaft of a vehicle.

### Detailed description of an embodiment of the invention

With reference to the above cited figures, an equipment according to the invention for monitoring ambient parameters around a vehicle is indicated as a whole with number 10.

In the described example, the vehicle is a motor vehicle. It should be understood that the present invention can be applied to any vehicle provided with a wheel and an axle shaft or, more in general, a shaft exiting from the wheel hub. In the described example, the axle shaft is indicated with number 11.

The equipment 10 comprises a structure 12 where there are integrated a coupling apparatus K for coupling to the axle shaft 11, a power supply device H and a detector R for detecting ambient parameters, powered by the power supply device H.

In particular, in this example, the ambient parameters detector R comprises a position detector R1, for example a GPS or the like, and a transmitting device R2 for transmitting position data to a control unit (that are not shown in the figures for the sake of simplicity).

It is understood that the position detector and the position data transmitting device can be of various type, according to the state of the art, taking into account that the function of the position detector is to know the spatial coordinates, i.e. the position, of the vehicle with which the equipment 10 is associated, and to transmit these coordinates/the position to a system for remote monitoring the position.

In this example, the coupling apparatus K for coupling to the axle shaft 11 comprises a first part 14 defining a first cradle for housing the axle shaft, and a second part 15 suitable to be closed onto the first part 14 and defining a second housing cradle, in order to fasten the group formed by the first part 14 and the second part 15 to the axle shaft 11 contained there inside.

The second part 15 is hinged to an end of the first part 14 through a hinge 16. A coupling mechanism 17, preferably a fast coupling mechanism, for coupling the two parts is provided at opposite ends of the first part 14 and second part 15 with respect to the hinge 16.

The fast coupling mechanism 17 comprises, for example, a toothed portion 17A, preferably with a saw-like toothing, defined on the second part 15, and a corresponding tight portion 17B defined on the first part 14, inside which the toothed portion is inserted. The coupling is for example provided by means of a known ratchet mechanism (not indicated by a number in the figures). A release button 17C is also preferably provided for releasing the ratchet mechanism and, more in general, allowing to release the toothed portion 17A that can exit, sliding, from the tight portion 17B.

The first and the second cradles housing the axle shaft 11 and defined by the first part 14 and by the second part 15 of the coupling apparatus K have rollers rotating according to respective axes parallel to each other and to the axis of the axle shaft. The outer surface of the rollers defines the areas of contact and fastening between the coupling apparatus and the vehicle axle shaft. The axle shaft is practically in direct contact with the rollers.

More in particular, at least one first roller 18 is on the first part 14 and at least one second roller 19 is on the second part 15. The first roller 18 is a rotating member co-acting with the electric power supply device H, as better explained below; herein, this first roller will be referred to as rotating member 18.

In this example, two idle second rollers 19 are provided on the second part 15, whilst two rotating members 18 are provided on the first part 14.

When the equipment is in use, the axle shaft 11 is in direct contact with the two rotating members 18 and with the two second rollers 19. The function of the rotating members is to allow electric power production, whilst the function of the second rollers is to stabilize the coupling between the axle shaft 11 and the equipment.

The electric power supply device H comprises a pair of electric generators 20 of the rotor/stator type, operatively coupled with respective rotating members 18.

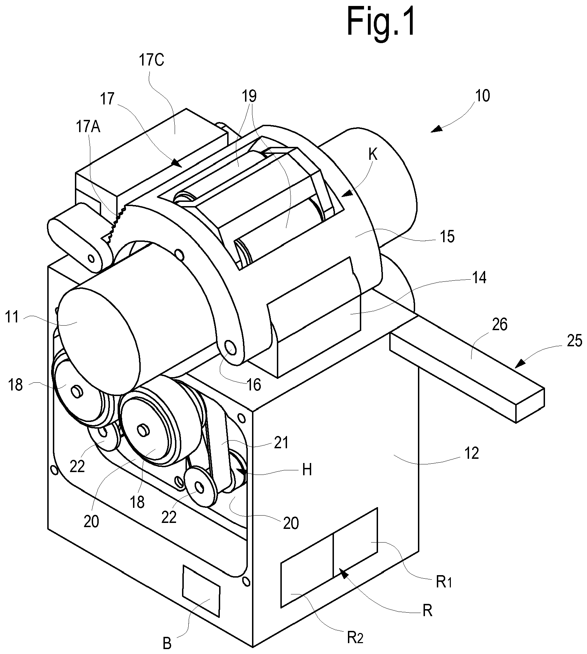

Fig. 1 shows the case where the coupling between an electric generator 20 and a respective rotating member 18 is done through a transmission belt 21 (or other flexible transmission element) that is coupled at one end to a pulley keyed on the rotor 22 of the respective generator 20 and at the other end to a pulley keyed on the rotating member.

The rotation of the axle shaft 11 therefore drives into rotation the rotating members 18, which transmit the rotary motion to the rotors 22 of the two electric generators 20, thus producing electric power.

An electric energy accumulator B is also provided for storing the generated electric energy and powering the detector R. The accumulator comprises, for example, an electric battery recharged through the electric energy produced by means of the two electric generators 20.

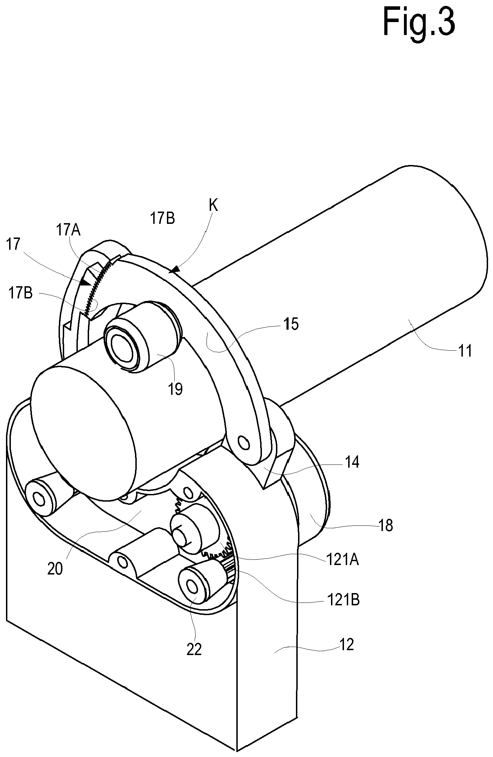

Obviously, the kinetic transmission between the rotating member and the rotor of the electric generator can be of different types; for example, a connection may be provided by means of one or more toothed gears, pinions etcetera. Figure 3 shows, for example, a variant of transmission where a toothed gear 121A is keyed onto the rotating member 18 and a toothed gear 121B is keyed onto the rotor, the gears meshing together (or with the interposition of further toothed gears). In a different variant, the rotating member may be integral with the rotor, i.e. it may be an extension of the rotor.

Anti-rotation means 25 are preferably provided, suitable to prevent the coupling apparatus, i.e. the equipment according to the invention, from rotating integrally with the vehicle axle shaft.

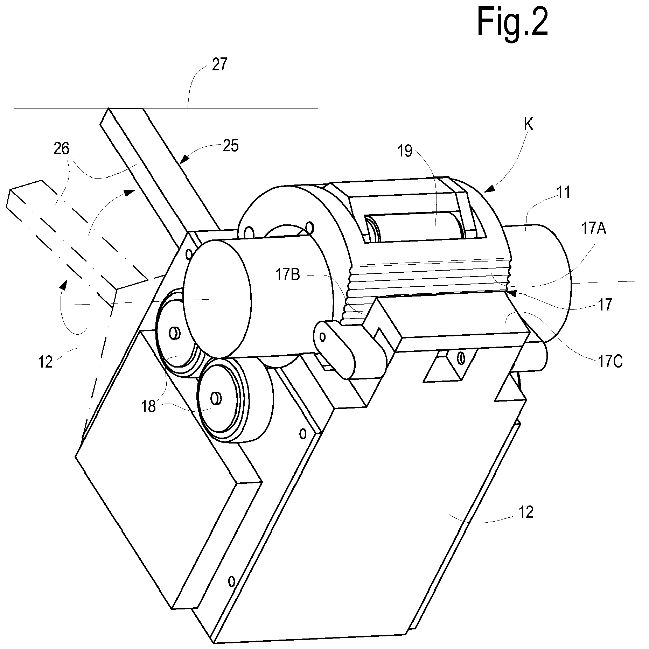

The anti-rotation means 25 comprise, for example, an appendix 26 integral with the structure 11 and suitable to abut against a part 27 of the vehicle, thus blocking it, as better described below and shown in Fig. 2.

The operation of the equipment 10 is as follows.

The equipment is open, that is the first part 14 and the second part 15 hinged thereto of the coupling apparatus K are not closed together by means of the coupling mechanism 17. The equipment is moved towards the axle shaft, inserting it in the space defined between the two parts 14 and 15, bringing the axle shaft into contact with the rotating members 18; the second part is then closed on the axle shaft, bringing the idle second rollers 19 into contact with the axle shaft. The toothed portion 17A is inserted into the tight portion 17B, making the ratchet mechanism snap so that the equipment 10 is completely fastened to the axle shaft.

The rotation of the axle shaft drives the equipment 10 into rotation until the appendix 26 abuts against a portion 27 of the vehicle, preventing the equipment from rotating, whilst the axle shaft continues rotating inside the equipment, driving the rotating members 18 into rotation, that, in turn, drive the rotors 22 of the electric generators into rotation, thus producing electric energy for recharging the battery powering the GPS detector and the transmitter.

The detector sends the position data to a control unit that verifies the vehicle position.

To release the equipment 10 from the axle shaft, it is sufficient to press the release button of the ratchet mechanism and to extract the toothed portion 17A from the tight portion 17B, so that the coupling mechanism 17 opens and the equipment can be removed.

It is understood that what is illustrated purely represents possible non-limiting embodiments of the invention, which may vary in forms and arrangements without departing from the scope of the concept on which the invention is based. Any reference numerals in the appended claims are provided for the sole purpose of facilitating the reading thereof in the light of the description herein before and the accompanying drawings and do not in any way limit the scope of protection.

## Claims

1. An equipment for monitoring ambient parameters around a vehicle, comprising:
- a coupling apparatus for coupling to an axle shaft of a vehicle,
- an electric power supply device comprising:
∘ at least one member rotating around an own rotation axis and suitable to come into contact, with its outer surface, with the surface of said axle shaft, so that the rotation of said axle shaft causes the rotation of said at least one rotating member around its axis,
∘ at least one electric generator, operatively coupled to said member and suitable to take motion from said rotating member for generating electric power,
∘ at least one electric energy accumulator,
- at least one detector for detecting ambient parameters, supplied by said power supply device.

2. Equipment according to claim 1, wherein said coupling apparatus comprises a fast coupling system for fast coupling to said axle shaft.

3. Equipment according to claim 1 or 2, wherein said coupling apparatus comprises a first part defining a cradle for housing the axle shaft, and a second part suitable to be closed onto said first part in order to fasten the group formed by said first part and second part to the axle shaft contained there inside.

4. Equipment according to claim 3, wherein said second part is hinged to an end of said first part, a coupling mechanism, preferably a fast coupling mechanism for coupling said two parts being provided at opposite ends of said first part and second part with respect to the hinge.

5. Equipment according to claim 4, wherein said fast coupling mechanism comprises a toothed portion, preferably with a saw-like toothing, defined on said first or second part and suitable to be inserted into a corresponding tight portion defined on said second or first part; said fast coupling mechanism being preferably of the rachet-type.

6. Equipment according to one or more of claims 3, 4, or 5, wherein rotating rollers are provided on said first part and/or second part of the coupling apparatus, whose rotation axis is preferably parallel to the axis of said rotating member, and whose outer surface defines, with the surface of said rotating member, the areas of contact and fastening between the coupling apparatus and the vehicle axle shaft.

7. Equipment according to one or more of the previous claims, wherein said at least one rotating member rotates around an own rotation axis integral with the coupling apparatus.

8. Equipment according to one or more of the previous claims, wherein said coupling apparatus, said electric generator, and said at least one detector of ambient parameters are integral so as to form a single object suitable to be directly fixed on said vehicle axle shaft, preferably in a single coupling step.

9. Equipment according to one or more of the previous claims, wherein said at least one rotating member is kinetically coupled to at least one rotor of said at least one electric generator of the rotor/stator type.

10. Equipment according to claim 8, wherein the rotation axis of said at least one rotating member is misaligned with respect to the rotation axis of the rotor of said electric generator, said axes being preferably parallel.

11. Equipment according to claim 8 or 9, wherein said at least one rotating member is kinetically coupled to at least one rotor of said at least one electric generator of the rotor/stator type by means of a flexible chain or belt coupling, or a similar coupling, or by means of one or more transmission gears for transmitting the rotary motion.

12. Equipment according to claim 8, wherein the rotation axis of said at least one rotating member is aligned with the rotation axis of the rotor of said electric generator.

13. Equipment according to one or more of the previous claims, wherein said at least one detector of ambient parameters comprises a position detector, preferably a GPS or the like, and preferably a transmitting device for transmitting position data to a control unit.

14. Equipment according to one or more of the previous claims, wherein said at least one detector of ambient parameters comprises one or more of the following: at least one temperature sensor, at least one humidity sensor, at least one view system like preferably a camera or a video camera, at least on microphone.

15. Equipment according to one or more of the previous claims, comprising anti-rotation means suitable to prevent said coupling apparatus from rotating, at least partially, integrally with said vehicle axle shaft; said anti-rotation means comprise preferably an appendix integral with said coupling apparatus and/or said electric generator and/or said detector of ambient parameters, the appendix being suitable to abut against a part of the vehicle, so that the rotation of the axle shaft drives said apparatus into rotation until said appendix abuts against a portion of the vehicle, thus preventing the equipment from rotating, with the axle shaft continuing rotating inside the equipment, driving said rotating member into rotation and producing electric energy.
